(19) Europäisches Patentamt
European Patent Office
Office européen des brevets

(11) Veröffentlichungsnummer: **0 219 778 B1**

# (12) EUROPÄISCHE PATENTSCHRIFT

(45) Veröffentlichungstag der Patentschrift: **23.08.89**

(51) Int. Cl.⁴: **B29C 33/64**

(21) Anmeldenummer: **86114070.5**

(22) Anmeldetag: **10.10.86**

(54) **Verfahren zur Verbesserung der Standfestigkeit und zur Erhöhung der Abformzahlen von Formmaterialien in Reaktiv-Beschichtungen.**

(30) Priorität: **22.10.85 DE 3537510**

(43) Veröffentlichungstag der Anmeldung: **29.04.87 Patentblatt 87/18**

(45) Bekanntmachung des Hinweises auf die Patenterteilung: **23.08.89 Patentblatt 89/34**

(84) Benannte Vertragsstaaten: **DE FR IT NL**

(56) Entgegenhaltungen:
**GB-A- 2 045 824**
**US-A- 4 163 082**

**Merkblatt Fa. Bayer AG, AV FO 38, Ausgabe August 1983**

(73) Patentinhaber: **BAYER AG, D-5090 Leverkusen 1 Bayerwerk(DE)**

(72) Erfinder: **Steinbach, Hans-Horst, Dr., Im Birkelshof 1, D-5060 Bergisch Gladbach 2(DE)**
Erfinder: **Hintsch, Claus-Jürgen, Kämpchenstrasse 1, D-5090 Leverkusen 1(DE)**
Erfinder: **Weber, Karl-Arnold, Dr., Saarstrasse 59, D-5090 Leverkusen 1(DE)**
Erfinder: **Prüller, Günter, Gustav-Heinemann-Strasse 38, D-5090 Leverkusen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft ein Verfahren zur Erhöhung der Abformgenauigkeit und Verbesserung der Haltbarkeit von Matrizen aus Siliconkautschuk oder von Trennpapieren, die als Trennträger bei der Durchführung von Beschichtungen nach dem Umkehrverfahren verwendet werden. Meist werden derartige Matrizen aus handelsüblichen 2-Komponenten-Silicon-Kautschuken hergestellt. Matrizen aus diesen Materialien ermöglichen einige hundert Abformungen in einer kontinuierlichen laufenden Anlage. Die Abformgenauigkeit nimmt mit zunehmender Dauer ab und schließlich ist wegen der mechanischen Abnutzung der Oberfläche die Abformgenauigkeit nicht mehr ausreichend. Außerdem nimmt die Trennfähigkeit als solche ab, so daß es nach einer Anzahl von Abformungen nicht mehr möglich ist, die Abformlinge ohne Zerstörung der Oberfläche im laufenden Prozeß vom Trennträger zu entfernen.

In einem bekannten Reaktiv-Beschichtungsverfahren werden Leder oder andere Substrate in einem Direkt- oder Umkehr-Beschichtungsverfahren mit Polyurethan lösungsmittelarm zugerichtet, wie es beispielsweise in der DE-PS 26 37 I15 beschrieben ist.

Für die Beschichtung von Leder im obengenannten Umkehrverfahren sind Siliconkautschuk-Matrizen ebenso geeignet wie Trennpapiere. Die Matrizen werden von Narbenleder als Abgüsse hergestellt. Es können auch z.B. Hinterschneidungen von Schuppen usw. optisch genau reproduziert werden, was bei Verwendung von Trennpapieren nicht möglich ist.

In dem genannten Verfahren werden die Siliconkautschuk-Matrizen durch den sich ständig wiederholenden Kontakt mit den Beschichtungsmassen stark beansprucht. Nach einer Anzahl von Abformungen (etwa I5O) läßt das Trennvermögen der Matrizen durch chemischen Abbau des Siliconkautschuks nach, so daß sie durch neue Matrizen ersetzt werden müssen. Dieser Abbau des Siliconkautschuks geht einher auch mit einer mechanischen Abnutzung und einem Verschleiß der Matrizenoberfläche, die die Genauigkeit der Narbenabbildung beeinträchtigt.

Um das Trennverhalten der Siliconkautschuk-Matrizen zu verbessern und so zu höheren Abformzahlen zu kommen, wurden verschiedene Maßnahmen ergriffen, z.B.:

I) Einsatz von Siliconkautschuk mit verbesserten mechanischen Eigenschaften. Hierbei handelt es sich um sogenannte "high strength Systeme", d.h. um 2K-RTV Siliconmassen mit erhöhter Weiterreißfestigkeit (gemäß DIN 53 5I5 oder ASTM D 624 B). Der Wert der Weiterreißfestigkeit lag dabei oberhalb von 6 Nmm.
Ergebnis: Keine Verbesserung des Trennverhaltens, wohl aber erhöhte Abriebbeständigkeit.

2) <u>Einarbeitung</u> von Trennmitteln in den für die Matrizenherstellung bestimmten Siliconkautschuk, wie z.B.
Siliconöle,
Ölsäure,
Vaseline,
Paraffinöle.
Ergebnis: Hier zeigten sich gewisse Teilerfolge. Sie waren aber nicht ausreichend. Die Versuche, die Trennwirkung durch Zusätze von 3 - 5 % nieder- bis hochmolekularer Siliconöle zu verbessern, beziehungsweise zu verlängern, brachten nur in begrenztem Umfang Erfolge. Bei zu hoher Dosierung (oberhalb 3 %) schwitzen die Öle aus und führen zu Verlaufstörungen bei der Beschichtung. Bei niedrigeren Dosierungen (unter 2 %) bleibt der Effekt vergleichsweise gering. Außerdem beeinträchtigen ausschwitzende Öle und Fette die Haftung von z.B. Finish-Produkten, wie sie üblicherweise in der Lederindustrie zur Oberflächenbeeinflussung von Ledern eingesetzt werden.

3) <u>Behandlung</u> der im Einsatz befindlichen Siliconkautschukmatrizen mit Trennmitteln, wie z.B.
Siliconöle,
Ölsäure,
Vaseline,
Siliconharze.
Ergebnis: Teilerfolge, aber nicht ausreichend. Diese Behandlungsweise wird in der Praxis seit langem unter Verwendung eines Silicon-Harzes ausgeübt und als Regenerierung der Matrizen bezeichnet (vgl. z.B. Merkblatt der Fa. Bayer AG, AV FO 38, Ausgabe August I983).
Das Regenerieren von Matrizenoberflächen kann nicht beliebig oft wiederholt werden, da durch mehrfaches Überspritzen der Matrizenoberfläche mit einem Kunststoff die Abbildungsgenauigkeit durch Verschleiern der Feinheiten der Struktur (Narben) sehr deutlich abnimmt.

4) Bei der Suche nach neuen Möglichkeiten wurde Polymethylhydrogensiloxan in den für die Matrizenherstellung verwendeten Siliconkautschuk eingearbeitet:
Ergebnis: Blasen im Vulkanisat, Vulkanisat brüchig, für die Herstellung von Matrizen nicht geeignet.

5) Wenn Methylhydrogenpolysiloxan zum Regenerieren der Matrizen aufgetragen wurden, zeigte sich eine spontane Verbesserung der Trennwirkung bei 3O bis 5O Abformungen. Von einem Matrizendurchgang zum anderen fällt jedoch die Trennfähigkeit so stark ab, daß dann eher von einer Haftvermittlerwirkung für die Beschichtung als von einer Trennwirkung gesprochen werden kann.
Die Matrizen werden dabei so stark beschädigt, daß sie verworfen werden müssen und die in diesem Durchgang beschichteten Leder ebenfalls verworfen werden müssen, da sie unverkäuflich sind.

Gegenstand der vorliegenden Erfindung ist nun ein Verfahren zur Verbesserung der Standfestigkeit und zur Erhöhung der Abformzahlen der bei der Abformung von Oberflächen nach dem Reaktiv-Beschichtungsverfahren (wie es z.B. in dem bereits genannten Merkblatt Bayer AG, AV FO 38, Ausgabe August I983 eingehend beschrieben wird ) eingesetzten Trennträgern, auf Basis von Trennpapieren oder Silicon-Matrizen, dadurch gekennzeichnet, daß die Trennträger wie üblich mit einem Vorfinish - oft auch Prefinish-genannt behandelt

werden, der jedoch zusätzlich erfindungsgemäß bis zu 4 g/l vorzugsweise l bis 2 g/l an Methylhydrogenpolysiloxan enthält.

Überraschenderweise wurde gefunden, daß durch Zugabe von Methylwasserstoffpolysiloxanen in Mengen von bis zu 4 g/l, vorzugsweise von l bis 2 g/l zum Vorfinish eine ganz beachtliche Verbesserung der Standfestigkeit der Matrizen und auch von Trennpapieren nach sich ziehen, die zu einer sprunghaften Vervielfältigung der Abformzahlen führen. Hierbei ist zu beachten, daß unter wasserfreien Bedingungen Methylhydrogenpolysiloxan nicht mit - NCO, dagegen spontan z.B. mit (Poly)-aminen reagiert. Da sie sich an der mechanischen Sperrschicht, d.h. dem Vorfinish, zwischen Trennträger und Beschichtungsmasse befinden, binden sie z.B. wandernde (Poly)-amine auf chemischem Wege ab und verhindern dadurch, daß diese (Poly)-amine die z.B. Matrizenoberflächen chemisch angreifen können. Gegenüber den wandernden (Poly)-aminen befinden sich die Methylhydrogensiloxane an den Grenzflächen im örtlichen Überschuß. Auf diese Weise bleibt die Matrizenoberfläche in ihrer Abformgenauigkeit und Trennfähigkeit wesentlich länger unverändert. Bisher liegen Erfahrungen vor, wonach mehr als 6OO gute Abformungen möglich sind. Selbst Matrizen, die nicht mehr genügend trennfähig waren, wurden nach Anwendung eines derartigen Vorfinishs nach 2 - 3 Durchgängen wieder voll trennend und damit wieder einzusatzfähig. Zusätze von mehr als 5 g/l Methylhydrogenpolysiloxan zum Vorfinish erwiesen sich bereits als schädlich. Die Matrizenoberfläche wurde dann nach wenigen Durchgängen speckartig glänzend und es kam zu Verlaufsstörungen bei der Beschichtung.

Als Methylhydrogenpolysiloxane können lineare oder verzweigte Polysiloxane der Viskosität von 1 bis 1OOO $mm^2 . s^{-1}$ (cSt) - vornehmlich aber 1O bis 5O cSt - eingesetzt werden. Sie können neben Methylgruppen höhere Alkylreste, Phenyl oder Fluoralkylgruppen am Silicium gebunden enthalten. Sie können als lineare, verzweigte oder harzartige Verbindungen entweder in reiner Form oder in geeigneten Lösungsmitteln gelöst eingesetzt werden. Wichtig ist nur, daß sie bis zu 1,7 Gew.% SiH-gebundenen Wasserstoff enthalten. Bevorzugt geeignet sind Verbindungen mit Gehalt von O,3 bis 1,3 % des am Siliciumatom gebundenen Wasserstoffs, wobei die Verbindungen mit steigendem Wasserstoffgehalt günstiger sind.

Das erfindungsgemäße Verfahren soll nun anhand der folgenden Beispiele noch näher erläutert werden.

In den genannten Vorfinishrezepturen wurde die Konzentration in g/l angegeben, da sich diese auf den Auftrag der Vorfinishe im Spritzauftrag beziehen. Wenn der Vorfinish jedoch im Rakel- bzw. Druckauftragsverfahren auf den Trennträger aufgebracht wird, dann sind die Angaben entsprechend auf l - lO g/kg Zusatz in einfacher Weise umzurechnen, so daß sie den eingangs genannten Spritzrezepturen in der Relation Feststoff/Methylhydrogenpolysiloxanen je kag entsprechen.

Bei den Rakel- bzw. Druckaufträgen mit z.B. Desmoderm(R) (s. DE-PS 22 2l 798 und US-P 3,857,8O9) Finish A (I) der Bayer AG, D-5O9O Leverkusen (Polyesterurethanharnstoff auf Basis eines linearen Polyesters aus Adipinsäure/Hexandiol-l,6/lsophoron-diisocyanat und einem Diamin) können natürlich auch stärkere Striche von z.B. 3O - 4O g Feststoff/$m^2$ in einem Auftrag aufgebracht werden. Diese entspricht in der Technik und auch im Produkt z.B. den Vorstrichen mit PUR-Einkomponenten-System, wie sie in der Textilbeschichtungsindustrie praxisüblich sind.

Das erfindungsgemäße Verfahren soll anhand der folgenden Beispiele noch näher erläutert werden.

<u>Beispiel I</u>

2OO g I
798,5 g eines Lösungsmittelgemischs aus Toluol, Cyclohexanon und Methylethylketon (MEK)
l,5 g $Me_3SiO (HMeSiO)_{35}SiMe_3$ ($Me = CH_3$ -)

Aufgesprüht wurden 75 g Ansatz pro $m^2$ Matrize.

Die so vorbeschichtete Matrize wurde in eimem Beschichtungsverfahren (Levacast(R)-Verfahren entsprechend DE- PS 26 37 ll5) mit einer Mischung bestehend aus:

a) einer 8O %igen Lösung eines Prepolymeren aus Isophoron-diisocyanat und einem Polyester auf Basis von Adipinsäure und Hexandiol sowie

b) einer Zubereitung eines teilblockierten Härtergemisches auf Basis von Isophorondiamin, Methylethylketon und Wasser wie es im Beispiel Nr. I der DE-PS 26 37 ll5 "Verfahren zur Herstellung von Polyurethanharnstoffen" beschrieben wurde,

beschichtet. Leder wurde aufkaschiert, nach Passage eines Trockenkanals wurde das beschichtete Leder von der Matrize - zusammen mit dem Vorfinish - abgenommen. Dieser Vorgang wurde 5OO mal fortlaufend wiederholt, ohne daß eine "Regenerierung" der Matrizenoberfläche erforderlich war.

<u>Beispiel 2</u>

2OO g eines Polyesterpolyurethans gelöst in Cyclohexanon und MEK im Verhältnis 2:3 und einem Zustatz von einem vorgelösten Nitrocelluloseansatzes wobei der Gesamtfeststoffgehalt 2O % beträgt.
Die Relation zwischen PU-Feststoff und Nitrocellulose-Feststoff beträgt 2:l.
798,5 g eines Gemisches aus organischen Lösungsmitteln bestehend aus Toluol,Cyclohexanon und MEK im Verhältnis l:l:3
l,5 g $Me_3SiO (HMe SiO)_{35} SiMe_3$
werden wie unter I mit 75 g/$m^2$ auf eine Matrize aufgespritzt und weiter Verfahren wie unter Beispiel I angegeben.

Die Beschichtungen konnten 55O mal wiederholt werden

Beispiel 3

160 g eines Polyurethans bestehend aus einem Polyester aus Adipinsäure und Hexandiol gelöst als 15%ige Lösung im Lösungsmittelgemisch bestehend aus Butylacetat und MEK im Verhältnis 1:3
838,5 g eines Gemisches aus organischen Lösungsmitteln bestehend aus Toluol, Cyclohexanon und MEK im Verhältnis von 1:1:3
1,5 g $Me_3SiO\ (HMeSiO)_{35}\ SiMe_3$
werden wie unter 1 mit 75 g/m² auf eine Matrize aufgespritzt und weiter verfahren wie unter Beispiel 1 angegeben.

Die Beschichtungen konnten 550 mal wiederholt werden.

Beispiel 4

Wie Beispiel 1, aber antelle der SiH-Verbindung aus Beispiel 1 wurde ein Siloxan der allgemeinen Formel

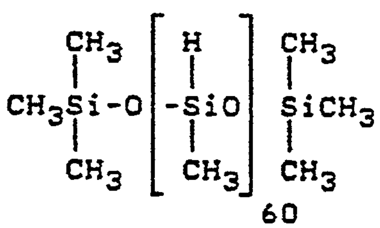

eingesetzt.

Befund wie unter Beispiel 1.

Beispiel 5

Anstelle einer Silicon-Kautschukmatrize wurde eine aus siliconisiertem, strukturiertem Trennpapier (Ultracast Scirocco) bestehende Schicht eingesetzt. Ansonsten wurde wie in Beispiel 1 gearbeitet.

Die Leder ließen sich nach 30maligem Gebrauch des Trennträgers noch einwandfrei abnehmen.

Beispiel 6 (Vergleich)

Die Beschichtungen wurden gemäß Beispiel 1, jedoch ohne einen Zusatz von Polymethylhydrogensiloxan zum Vorfinish, durchgeführt.

Ergebnis: Nach 100maligem Durchgang beginnen sich die Matrizen schwerer zu trennen. Die Trennfähigkeit kann zwar durch Regenerieren vorübergehend wieder verbessert werden, der Durchschnitt der Matrizen mußte trotzdem nach 250maligem Gebrauch verworfen werden. Die Abbildungsgenauigkeit nimmt jedoch nach jedem Regenerierungsschritt ab, wie ein Lederfachmann einwandfrei feststellen kann.

Beispiel 7 (Vergleich)

Das Beispiel wurde wie Beispiel 3, jedoch ohne Verwendung von SiH-haltigem Polysiloxan durchgeführt. Bereits nach 5maligem Durchgang trennt das Papier nicht mehr genügend.

Beispiel 8 (Vergleich)

Dieses Beispiel wurde wie Beispiel 1 durchgeführt. Dabei wurde 6,5 g SiH-haltiges Polysiloxan dem Vorfinish zugegeben. Der Vorfinish bestand aus den gleichen Komponenten wie in Beispiel 1 beschrieben. Hier traten bereits nach 5maligem Durchgang gravierende Verlaufsstörungen auf. Als Folge davon resultierten Beschichtungsoberflächen, die schon aus optischen Gründen wegen Unverkäuflichkeit verworfen werden mußten.

Beispiel 9 (Vergleich)

SiH-haltiges Polysiloxan wurde mit einem Lappen in einer Menge von 20 g/m² Matrize als Regenerierungsmittel aufgetragen. Anschließend wurde - nachdem SiH-haltiges Polysiloxan vollständig in die Matrize eingedrungen war - wie unter Beispiel 3 beschrieben. Nach 25 - 30 bis maximal 50 Durchgängen schlug die bis dahin gute Trennwirkung jedoch spontan von einem Durchgang zum anderen in Trennunfähigkeit um. Matrizen und beschichtetes Material mußten wegen mechanischer Zerstörung der Oberflächen, die bei dem Versuch die beiden Schichten voneinander zu trennen, eintrat, verworfen werden.

## Patentansprüche

1. Verfahren zur Verbesserung der Standfestigkeit und zur Erhöhung der Durchlaufzahl der bei der Abformung von Oberflächen nach Reaktiv-Beschichtungsverfahren eingesetzten Trennträger, auf Basis von Trennpapieren oder Silicon-Matrizen, dadurch gekennzeichnet, daß die Trennträger mit einem Vorfinish bzw. einem Deckstrich behandelt werden, der bei Sprühauftrag bis zu 4 g/l, vorzugsweise 1 bis 2 g/l bzw. bei Rakel- oder Druckauftrag 1 - 10 g/kg Deckstrichansatz an Methylhydrogenpolysiloxan mit bis zu 1,7 Gew.-% an SiH-gebundenen Wasserstoff, enthält.

2. Verfahren zur Verbesserung der Standfestigkeit der Trennträger gemäß Anspruch 1, dadurch gekennzeichnet, daß das dem Vorfinish zugegebene Methylhydrogenpolysiloxan zwischen 0,3 und 1,3 Gew.-% an SiH-gebundenen Wasserstoff enthält und eine Viskosität von 1 bis 1000 $mm^2 . s^{-1}$ (cSt), vorzugsweise 10 bis 100 $mm^2 . s^{-1}$, aufweist.

## Revendications

1. Procédé pour améliorer la résistance et accroître le nombre d'opérations exécutées au formage de surfaces par le procédé de revêtement réactif avec des supports de séparation à base de papiers de séparation ou de matrices de silicones, caractérisé en ce que l'on traite les supports de séparation par un apprêt préalable ou un apprêt de couverture contenant, dans le cas d'une application par pulvérisation, jusqu'à 4 g/litre, de préférence de 1 à 2 g/litre, et, dans le cas d'une application à la racle ou par impression de 1 à 10 g/kg d'enduit de couverture, d'un méthylhydrogénopolysiloxanne contenant jusqu'à 1,7% en poids d'hydrogène lié sous la forme de groupes SiH.

2. Procédé pour améliorer la résistance de supports de séparation selon la revendication 1, caractérisé en ce que le méthylhydrogénopolysiloxanne ajouté à l'apprêt préalable contient de 0,3 à 1,3% en poids d'hydrogène lié sous la forme de groupes SiH et présente une viscosité de 1 à 1 000 $mm^2.s^{-1}$ (cSt), de préférence de 10 à 100 $mm^2.s^{-1}$.

## Claims

1. Process for improving the stability and for increasing the number of passages of release carriers, based on release papers or silicone dies, used in the reproduction of surfaces by reactive coating methods, characterised in that the release carriers are treated with a pre-finish or a top coat which contains, on application by spraying, up to 4 g/l, preferably 1 to 2 g/l, or on application with the aid of a coating knife or pressure, 1–10 g/kg of top coat mixture, of methylhydrogenpolysiloxane containing up to 1.7% by weight of SiH-bonded hydrogen.

2. Process for improving the stability of the release carriers according to Claim 1, characterised in that the methylhydrogenpolysiloxane added to the pre-finish contains between 0.3 and 1.3% by weight of SiH-bonded hydrogen and has a viscosity of 1 to 1 000 $mm^2.s^{-1}$ (cSt), preferably 10 to 100 $mm^2.s^{-1}$.